# EUROPÄISCHE PATENTSCHRIFT

(11) **EP 3 261 886 B1**
(45) Veröffentlichungstag und Bekanntmachung des Hinweises auf die Patenterteilung: **10.04.2019**
(21) Anmeldenummer: 15706808.1
(22) Anmeldetag: 26.02.2015
(51) Int. Cl.: B60S 3/00, F26B 21/00

(54) **FAHRZEUGWASCHANLAGE**
VEHICLE WASHING SYSTEM
INSTALLATION DE LAVAGE DE VÉHICULES

(43) Veröffentlichungstag der Anmeldung: 03.01.2018
(73) Patentinhaber: Alfred Kärcher SE & Co. KG, 71364 Winnenden (DE)
(72) Erfinder: SEIBOLD, Andreas, 71394 Kernen (DE); BENSING, Felix, 70437 Stuttgart (DE); GELTZ, Tobias, 73230 Kirchheim unter Teck (DE); HABERL, Bernd, 71554 Weissach im Tal (DE)
(74) Vertreter: Hoeger, Stellrecht & Partner Patentanwälte mbB
(86) Internationale Anmeldenummer: PCT/EP2015/054019
(87) Internationale Veröffentlichungsnummer: WO 2016/134768

(56) Entgegenhaltungen:
- EP-A1- 0 700 814
- GB-A- 1 120 697
- US-A- 4 848 670
- US-A1- 2014 339 335

## Beschreibung

Die Erfindung betrifft eine Fahrzeugwaschanlage, umfassend eine Trocknungsvorrichtung zum Trocknen eines Kraftfahrzeugs, die an einer Halteeinrichtung der Fahrzeugwaschanlage gehalten ist und eine Düsentrageinrichtung aufweist, mindestens ein Gebläse sowie eine Mehrzahl von Düsen, die im Abstand zueinander an der Düsentrageinrichtung angeordnet sind und vom mindestens einen Gebläse mit Trocknungsluft beaufschlagbar sind.

Die Trocknungsvorrichtung kommt bei der Fahrzeugwaschanlage nach einem Waschvorgang zum Einsatz, um das Fahrzeug mittels eines Luftstroms zu trocknen. Es ist bekannt, dass die Trocknungsvorrichtung eine sich entlang der gesamten Arbeitslänge erstreckende spaltförmige Düse aufweisen kann. Die Länge der Düse kann beispielsweise ungefähr zwei Meter betragen, und zu deren Betrieb ist ein nicht unerheblicher Volumenstrom von Trocknungsluft erforderlich, um ein akzeptables Trocknungsergebnis zu erzielen. Entsprechend groß muss ein Gebläse der Trocknungsvorrichtung dimensioniert sein, um diesen Volumenstrom bereitzustellen.

Bekannt ist es auch, dass die Trocknungsvorrichtung eine Mehrzahl von schachtförmigen Einzeldüsen aufweisen kann. Diese können von separaten Gebläsen mit Trocknungsluft beaufschlagt werden. Beispiele für Trocknungsvorrichtungen mit separaten Düsen sind in der gattungsgemäßen EP 0 700 814 B1 und in der GB 1 120 697 offenbart. Auch diese Trocknungsvorrichtungen erfordern einen erheblichen Einsatz von Energie, damit der für ein akzeptables Trocknungsergebnis erforderliche Volumenstrom bereitgestellt werden kann.

In der DE 103 33 976 A1 ist eine handhaltbare Trocknungsvorrichtung beschrieben. Die Trocknungsvorrichtung weist eine Vielzahl von in einer Reihe angeordneten Punktdüsen auf. Auf diese Weise soll eine vorhangartige Trocknungsströmung erzeugt werden.

Aufgabe der vorliegenden Erfindung ist es, eine Fahrzeugwaschanlage mit einer Trocknungsvorrichtung bereitzustellen, mit der bei nach Möglichkeit geringem Energieaufwand ein akzeptables Trocknungsergebnis erzielt werden kann.

Diese Aufgabe wird bei einer gattungsgemäßen Fahrzeugwaschanlage erfindungsgemäß dadurch gelöst, dass die Düsen Flachstrahldüsen sind, die jeweils einen sich fächerförmig ausbreitenden Luftstrom bereitstellen.

Bei der erfindungsgemäßen Fahrzeugwaschanlage kommt eine Trocknungsvorrichtung mit einer Mehrzahl von Düsen zum Einsatz. Insbesondere handelt es sich dabei um Flachstrahldüsen. Unter "Flachstrahldüse" wird vorliegend insbesondere eine Düse verstanden, die einen sich in oder im Wesentlichen in einer Ebene ausbreitenden flachen Luftstrom bereitstellt. Die Düsen sind im Abstand zueinander an der Düsentrageinrichtung angeordnet und stellen einen jeweiligen fächerförmigen Flachstrahl bereit. Aus einer jeweiligen Flachstrahldüse tritt der Luftstrom unter einem vorgegebenen oder vorgebbaren Öffnungswinkel aus, so dass in zunehmendem Abstand von der jeweiligen Düse ein größerer Bereich der zu trocknenden Fahrzeugfläche vom Luftstrom erfasst werden kann. Durch Einsatz einer Mehrzahl von Düsen ist dadurch die Möglichkeit gegeben, durch die räumlich begrenzten Luftaustritte an der Düsentrageinrichtung am Ort der Anwendung, nämlich der zu trocknenden Fahrzeugfläche, einen räumlich ausgebreiteten Luftstrom bereitzustellen. Mittels der Flachstrahlen kann Flüssigkeit wirkungsvoll von der zu trocknenden Fahrzeugfläche verdrängt werden. Der energetische Aufwand, um an den Düsen den hierfür erforderlichen Volumenstrom an Trocknungsluft bereitzustellen, kann, wie sich in der Praxis zeigt, gegenüber herkömmlichen Trocknungsvorrichtungen verringert werden.

Bei der Trocknungsvorrichtung der vorliegenden Erfindung handelt es sich beispielsweise um eine Dachtrocknungsvorrichtung der Fahrzeugwaschanlage. Als "Dachtrocknungsvorrichtung" wird eine Trocknungsvorrichtung angesehen, die zum Trocknen insbesondere des Daches des Fahrzeuges eingesetzt wird. Mit der Dachtrocknungsvorrichtung werden vorzugsweise auch andere, obenliegende Abschnitte des Kraftfahrzeuges getrocknet, d. h. insbesondere Karosseriebauteile wie eine Motorhaube oder ein Kofferraumdeckel oder die Frontscheibe sowie die Heckscheibe des Fahrzeugs.

Die Dachtrocknungsvorrichtung erstreckt sich insbesondere quer zu einer Behandlungsrichtung der Fahrzeugwaschanlage. Handelt es sich bei dieser um ein Waschportal, wird unter der Behandlungsrichtung eine Verfahrrichtung in oder entgegen der Fahrzeuglängsrichtung verstanden. Handelt es sich bei der Fahrzeugwaschanlage um eine Waschstraße, ist die Behandlungsrichtung der Transportrichtung des Fahrzeuges in der Waschstraße entgegengerichtet.

Günstig ist es, wenn die Trocknungsvorrichtung eine Hubeinrichtung aufweist, über die die Düsentrageinrichtung höhenverstellbar an der Halteeinrichtung gehalten ist. Dies gibt die Möglichkeit, die Düsentrageinrichtung bedarfsabhängig anzuheben oder abzusenken und in einen Abstand zu der zu trocknenden Fahrzeugfläche zu bringen, bei dem ein möglichst gutes Trocknungsergebnis erzielt werden kann.

Von Vorteil ist es, wenn die Fahrzeugwaschanlage eine Detektionseinrichtung umfasst, mit der die Lage einer zu trocknenden Fahrzeugfläche des Fahrzeuges relativ zu den Düsen erfassbar ist, und wenn mittels der Hubeinrichtung ein Abstand der Düsen von der Fahrzeugfläche derart einstellbar ist, dass Luftströme benachbarter Düsen an der Fahrzeugfläche aneinander grenzen oder einander zumindest teilweise überlagern. Abhängig von einer Information oder einem Signal der Detektionseinrichtung kann die Hubeinrichtung angesteuert werden, um die Düsentrageinrichtung anzuheben oder abzusenken. Die Hubeinrichtung und die Detektionseinrichtung sind beispielsweise mit einer Steuereinrichtung der Fahrzeugwaschanlage elektrisch verbunden. Der Abstand der Düsen von der Fahrzeugfläche wird vorzugsweise so eingestellt, dass die Luftströme benachbarter Düsen an der Fahrzeugfläche aneinander grenzen um sicherzustellen, dass zwischen "benachbarten" Luftströmen an der Fahrzeugfläche keine Bereiche verbleiben, die nicht direkt von einem Luftstrom erfasst werden. Vorzugsweise wird der Abstand so eingestellt, dass benachbarte Luftströme einander an der Fahrzeugfläche an einem Überlagerungsbereich überlagern. Ungetrocknete Bereiche zwischen benachbarten Düsen lassen sich dadurch besonders zuverlässig vermeiden.

Vorzugsweise wird der Abstand der Düsen von der Fahrzeugfläche gesteuert und/oder geregelt, um konstant oder im Wesentlichen konstant gehalten zu werden, abhängig von der Kontur des Fahrzeuges.

Es kann vorgesehen sein, dass der Abstand der Düsen von der Fahrzeugfläche derart einstellbar ist, dass die Luftströme benachbarter Düsen einander oberhalb der zu trocknenden Fahrzeugfläche überlagern. Darunter kann insbesondere verstanden werden, dass die Luftströme benachbarter Düsen einander oberhalb der Fahrzeugfläche schneiden um sicherzustellen, dass zwischen den Düsen kein ungetrockneter Bereich der Fahrzeugfläche verbleibt.

Mit der Detektionseinrichtung ist vorzugsweise die Kontur des Fahrzeuges zur Ermittlung der Lage der zu trocknenden Fahrzeugfläche erfassbar. Zu diesem Zweck kann die Detektionseinrichtung zum Beispiel eine oder mehrere Lichtschranke(n) umfassen, mit der bzw. denen die Kontur des Fahrzeugs vermessen wird. Dies kann beispielsweise vor oder während eines Waschvorgangs der Fahrzeugwaschanlage durchgeführt werden. Dadurch lässt sich vermeiden, dass vor dem Trocknungsvorgang die Kontur des Fahrzeugs gesondert erfasst werden muss. Denkbar ist auch, dass die Kontur des Fahrzeugs anhand von optischen Aufnahmen des Fahrzeugs ermittelt wird. Alternativ oder ergänzend kann die Detektionseinrichtung den Typ des Kraftfahrzeugs erfassen und daraus die Kontur des Fahrzeugs ermitteln. Zur Erfassung des Kraftfahrzeugtyps kann insbesondere auch vorgesehen sein, dass eine Bedienperson den Fahrzeugtyp manuell vorgibt oder unter Einsatz eines Berechtigungsträgers, etwa einer Chipkarte oder dergleichen, mit der die Fahrzeugwaschanlage in Betrieb gesetzt wird.

Bei einer vorteilhaften Umsetzung der Fahrzeugwaschanlage in der Praxis erweist es sich als vorteilhaft, wenn der Abstand der Düsen von der Fahrzeugfläche kleiner ist als ungefähr 50 cm, vorzugsweise kleiner als 30 cm, und noch bevorzugter ungefähr 10 cm bis 25 cm beträgt. Bei einer besonders vorteilhaften Umsetzung weisen die Düsen einen Abstand von ungefähr 20 cm von der Fahrzeugfläche auf.

Bei einer vorteilhaften Umsetzung der Fahrzeugwaschanlage in der Praxis ist es günstig, wenn ein Öffnungswinkel des von den Düsen bereitgestellten Luftstroms kleiner ist als ungefähr 120°, vorzugsweise kleiner als 90°, und noch bevorzugter ungefähr 50° bis 80° beträgt. Als besonders günstig hat sich beispielsweise ein Öffnungswinkel von ungefähr 70° erwiesen.

Die Düsen können beispielsweise einen Öffnungsquerschnitt von ungefähr 80 mm² bis 280 mm² aufweisen, vorzugsweise ungefähr 110 mm² bis 225 mm², noch bevorzugter ungefähr 140 mm² bis 200 mm². Diese Werte können insbesondere als in Projektion längs einer Ausströmachse oder Mittenachse der Düsen gemessen angesehen werden.

Mit dem mindestens einen Gebläse wird je Düse vorzugsweise ein Volumenstrom von ca. 15 l/s bis 50 l/s, bevorzugt ungefähr 20 l/s bis 40 l/s und noch bevorzugter ungefähr 25 l/s bis 35 l/s an Trocknungsluft bereitgestellt.

Bei einer vorteilhaften Umsetzung der Fahrzeugwaschanlage in der Praxis ist es günstig, wenn der Abstand benachbarter Düsen voneinander ungefähr 10 cm bis 30 cm beträgt, vorzugsweise ungefähr 15 cm bis 25 cm. Eine besonders vorteilhafte Umsetzung weist beispielsweise einen Düsenabstand von ungefähr 18 cm bis 20 cm auf.

Der Abstand der Düsen von der Fahrzeugfläche kann mittels der Hubeinrichtung bei einer vorteilhaften Umsetzung der Fahrzeugwaschanlage beispielsweise derart eingestellt werden, dass die Luftströme einander benachbarter Düsen an der Fahrzeugfläche in einem Überlagerungsbereich von ungefähr 5 cm bis 10 cm Breite überlagern.

Beispielsweise schneiden die Luftströme benachbarter Düsen einander ungefähr 5 cm oberhalb der Fahrzeugfläche.

Günstig ist es, wenn die Düsen äquidistant zueinander an der Düsentrageinrichtung angeordnet sind, insbesondere an einem Träger der Düsentrageinrichtung gehalten sind.

Vorzugsweise umfasst die Düsentrageinrichtung einen quer zu einer Behandlungsrichtung der Fahrzeugwaschanlage ausgerichteten Träger, an dem mindestens zwei und vorzugsweise alle Düsen in Querrichtung nebeneinander angeordnet sind.

Die Düsen können an dem Träger gehalten sein, zum Beispiel an diesem montiert sein. Denkbar ist auch, dass die Düsen an dem Träger gebildet sind. Der Träger kann hierzu eine kanalartige Ausgestaltung haben und eine jeweilige Düsen definierende Öffnungen aufweisen.

Es kann vorgesehen sein, dass zwei oder mehr, in Querrichtung nebeneinander angeordnete Träger vorgesehen sind, an denen jeweils mindestens eine Düse angeordnet ist, vorzugsweise zumindest zwei Düsen. Denkbar ist, dass die Träger miteinander mechanisch gekoppelt sind und beispielsweise mit einer gemeinsamen Hubeinrichtung angehoben oder abgesenkt werden können oder mit einer gemeinsamen Neigungseinrichtung relativ zur Fahrzeugfläche geneigt werden können. Alternativ ist denkbar, dass gesonderte Hubeinrichtung und/oder Neigungseinrichtungen zum Anheben und Absenken bzw. Neigen der Träger vorgesehen sind.

Zur Erzielung einer konstruktiv einfachen Ausgestaltung ist es günstig, wenn der Träger geradlinig ausgestaltet ist und/oder wenn die Düsen längs einer geraden Linie am Träger angeordnet sind. Bei dieser Ausführungsform sind die Düsen insbesondere längs einer quer zur Behandlungsrichtung ausgerichteten Linie oder Achse ausgerichtet.

Bei einer andersartigen Ausführungsform kann vorgesehen sein, dass der Träger in Behandlungsrichtung eine konvexe Krümmung aufweist und/oder dass die Düsen längs eines in Behandlungsrichtung konvex gekrümmten Bogens am Träger angeordnet sind. "In Behandlungsrichtung konvex gekrümmt" kann vorliegend insbesondere so aufgefasst werden, dass in Behandlungsrichtung führend der Träger oder der von den Düsen definierte Bogen einen Scheitel aufweist.

Es wurde bereits darauf eingegangen, dass eine Neigungseinrichtung vorgesehen sein kann.

Günstig ist es, wenn die Trocknungsvorrichtung eine Neigungseinrichtung aufweist zum Neigen der Düsentrageinrichtung um eine quer zur Behandlungsrichtung ausgerichtete Neigungsachse. Durch Neigen der Düsentrageinrichtung kann die Richtung, unter der die Luftströme auf die zu trocknende Fahrzeugfläche auftreffen, variiert werden. Dies erlaubt es insbesondere, die Luftströme senkrecht zur Fahrzeugfläche auszurichten. Beispielsweise kann beim Verfahren der Düsentrageinrichtung bedarfsabhängig die Neigung der Düsentrageinrichtung so eingestellt werden, dass der Luftstrom jeweils senkrecht auf die Fahrzeugfläche auftrifft. Verläuft die Behandlungsrichtung von vorne nach hinten, wird die Düsentrageinrichtung beispielsweise an der Motorhaube und der Frontscheibe so geneigt, dass die Luftströme eine in der Behandlungsrichtung verlaufende Komponente aufweisen. An dem üblicherweise ungefähr horizontal ausgerichteten Fahrzeugdach können die Luftströme beispielsweise vertikal aus den Düsen austreten. Entsprechendes kann für einen Kofferraumdeckel gelten. An der Heckscheibe kann die Düsentrageinrichtung so geneigt werden, dass die Richtung der Luftströme eine entgegen der Behandlungsrichtung gerichtete Komponente aufweist.

Die Neigungseinrichtung ist mit der vorstehend erwähnten Steuereinrichtung der Fahrzeugwaschanlage vorzugsweise in elektrischer Verbindung und kann zum Beispiel abhängig von einer Information oder einem Signal der Detektionseinrichtung geneigt werden, um die Richtung der Luftströme zur Erzielung eines möglichst guten Trocknungsergebnisses einzustellen.

Insgesamt ist es von Vorteil, wenn die Luftströme der Düsen senkrecht auf eine zu trocknende Fahrzeugfläche ausrichtbar sind, deren Orientierung mittels einer Detektionseinrichtung erfassbar ist. Die Steuereinrichtung kann daraus die Orientierung der Fahrzeugfläche relativ zu den Düsen ermitteln.

Alternativ oder ergänzend kann vorgesehen sein, dass die Luftströme der Düsen so ausgerichtet werden, dass die Luftströme sich in einer Richtung ausbreiten, die stets eine Komponente in der Behandlungsrichtung aufweist. Dies erlaubt es zum Beispiel, Flüssigkeit von der Fahrzeugfläche in Richtung der Behandlungsrichtung wegzutreiben.

Die von den Düsen emittierten Luftströme sind vorzugsweise quer zur Behandlungsrichtung ausgerichtet.

Als vorteilhaft erweist es sich, wenn die von den Düsen emittierten Luftströme in einer Ebene oder im Wesentlichen in einer Ebene liegen. Dies ist insbesondere dann der Fall, wenn die Düsen, wie vorstehend erwähnt, nebeneinander geradlinig am Träger angeordnet sind.

Vorzugsweise sind die Düsen identisch, damit eine konstruktiv einfache Ausgestaltung der Fahrzeugwaschanlage erzielt werden kann.

Es kann vorgesehen sein, dass zwei oder mehr Düsen mit einem Gebläse strömungsverbunden sind. Insbesondere ist denkbar, dass die Fahrzeugwaschanlage nur ein Gebläse aufweist, das sämtliche Düsen mit Trocknungsluft beaufschlagt.

Bei einer andersartigen Ausführungsform kann vorgesehen sein, dass die Trocknungsvorrichtung eine Mehrzahl von Gebläsen umfasst, die jeweils einer Düse zugeordnet sind. Jede Düse kann von einem gesonderten Gebläse mit Trocknungsluft beaufschlagt werden.

Bei einer vorteilhaften Umsetzung der Fahrzeugwaschanlage in der Praxis können beispielsweise sieben Düsen vorgesehen sein, die gemeinsam an einem sich in Querrichtung zur Behandlungsrichtung erstreckenden Träger angeordnet und daran gebildet oder daran gehalten sind. Die Düsen können voneinander einen Abstand von ungefähr 15 cm bis 25 cm und vorzugsweise 18 cm bis 20 cm aufweisen. Die Öffnungswinkel der Luftströme der Flachstrahldüsen betragen beispielsweise ungefähr 70°. Der Abstand zur Fahrzeugfläche kann abhängig von einer Information oder einem Signal der Detektionseinrichtung beispielsweise auf ungefähr 20 cm eingestellt werden, vorzugsweise gesteuert oder geregelt. Die Luftströme können vorzugsweise so ausgerichtet werden, dass sie senkrecht auf die Fahrzeugfläche auftreffen.

Die Fahrzeugwaschanlage kann, wie bereits erwähnt, eine Portalwaschanlage sein oder eine solche umfassen. Die Düsentrageinrichtung ist zum Beispiel an seitlichen Trägern des Portals höhenverstellbar gehalten und um eine quer zur Behandlungsrichtung verlaufende, insbesondere horizontale, Neigungsachse neigbar gehalten.

Alternativ kann vorgesehen sein, dass die Fahrzeugwaschanlage eine Waschstraße ist oder eine solche umfasst.

Die nachfolgende Beschreibung bevorzugter Ausführungsformen der Erfindung dient im Zusammenhang mit der Zeichnung der näheren Erläuterung der Erfindung. Es zeigen:
- Figur 1:: eine schematische Darstellung einer erfindungsgemäßen Fahrzeugwaschanlage von vorne, ausgestaltet als Portalwaschanlage, sowie ein zu trocknendes Fahrzeug;
- Figur 2:: die Fahrzeugwaschanlage aus Figur 1 in einer schematischen Seitenansicht mit einem andersartigen zu trocknenden Fahrzeug;
- Figur 3:: schematisch ein Steuersystem der Fahrzeugwaschanlage aus Figur 1;
- Figur 4:: schematisch eine Frontansicht einer Düsentrageinrichtung samt Gebläsen einer Dachtrocknungsvorrichtung der Fahrzeugwaschanlage aus Figur 1;
- Figur 5:: eine Düsentrageinrichtung samt Gebläsen einer Dachtrocknungsvorrichtung bei einer andersartigen Ausführungsform der Fahrzeugwaschanlage und
- Figur 6:: schematisch Luftströme von zwei Düsen der Dachtrocknungsvorrichtung beim Auftreffen auf eine zu trocknende Fahrzeugfläche.

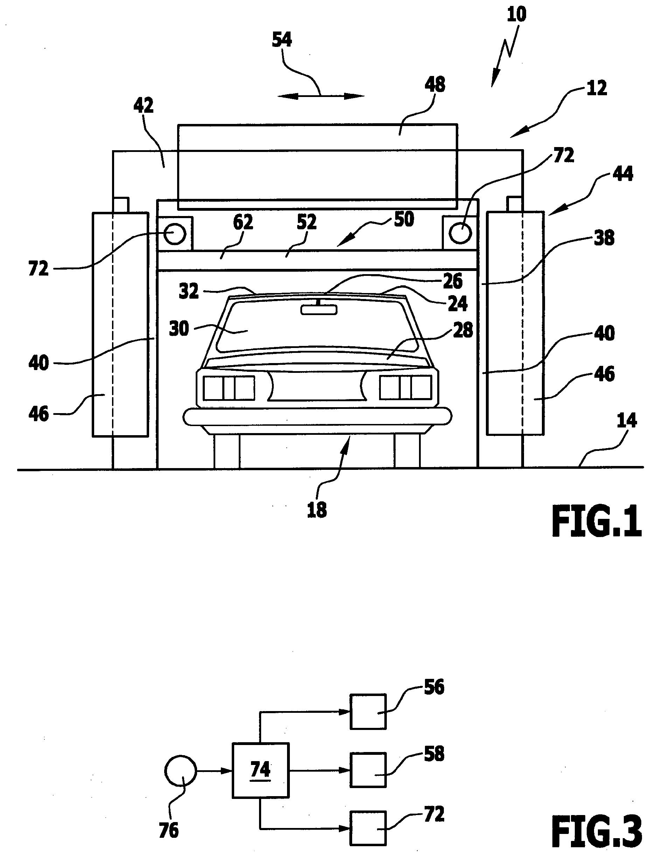

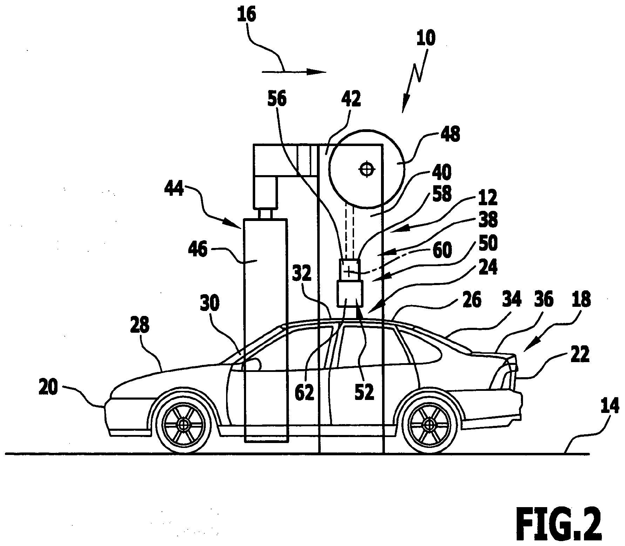

Die Figuren 1 und 2 zeigen in Frontansicht bzw. in Seitenansicht eine vorteilhafte Ausführungsform einer erfindungsgemäßen Fahrzeugwaschanlage 10. Die Fahrzeugwaschanlage 10 ist ausgestaltet als Portalwaschanlage, die ein Waschportal 12 auf einer Standfläche 14 umfasst. Die Standfläche 14 ist vorliegend als horizontal ausgerichtet anzusehen. Positions- und Orientierungsangaben wie beispielsweise "horizontal", "vertikal", "oben", "unten" oder dergleichen sind vorliegend auf einen bestimmungsgemäßen Gebrauchszustand der Fahrzeugwaschanlage 10 auf der als horizontal angesehenen Standfläche 14 bezogen aufzufassen.

Das Waschportal 12 kann längs einer Behandlungsrichtung 16 relativ zu einem zu reinigenden und auch zu trocknenden Fahrzeug 18 verfahren werden. Die Behandlungsrichtung 16 verläuft vorliegend von einer Vorderseite 20 zu einer Rückseite 22 des Fahrzeugs 18. Das Waschportal 12 kann auch in Gegenrichtung der Behandlungsrichtung 16 verfahren werden.

Das Fahrzeug 18 ist auf der Standfläche 14 positioniert und weist eine Oberseite 24 auf. An der Oberseite 24 ist eine zum Abschluss des Reinigungsvorgangs zu trocknende Fahrzeugfläche 26 angeordnet. Die Fahrzeugfläche 26 wird gebildet durch eine Motorhaube 28, eine Frontscheibe 30, ein Dach 32, eine Heckscheibe 34 und einen Kofferraumdeckel 36 des Fahrzeugs 18.

Das Waschportal 12 umfasst eine portalartige Halteeinrichtung 38, die im Abstand zueinander angeordnete Vertikalträger 40 und einen diese miteinander verbindenden Querträger 42 aufweist. Der Querträger 42 ist quer zur Behandlungsrichtung 16 ausgerichtet.

Am Waschportal 12 sind Waschwerkzeuge 44 zum Reinigen des Fahrzeugs 18 gehalten. Die Waschwerkzeuge 44 umfassen beispielsweise Seitenbürsten 46 an den Vertikalträgern 40 und eine Dachbürste 48, die am Querträger 42 oder an den Vertikalträgern 40 gehalten ist.

Mit den Waschwerkzeugen 44 kann das Fahrzeug 18 in an sich bekannter Weise gereinigt werden. Dabei wird das Fahrzeug 18 mit einer Flüssigkeit beaufschlagt, insbesondere Wasser. Im Anschluss an den Waschvorgang wird das Fahrzeug 18 gespült, üblicherweise ebenfalls mit Wasser. Dabei verbleibt Flüssigkeit auf dem Fahrzeug 18, insbesondere auf dessen Oberseite 24. Die Flüssigkeit wird in einem nachfolgenden Trocknungsvorgang von der Oberseite 24 entfernt.

Zum Trocknen des Fahrzeugs 18 umfasst die Fahrzeugwaschanlage 10 eine Trocknungsvorrichtung 50. Die Trocknungsvorrichtung 50 ist vorliegend ausgestaltet als Dachtrocknungsvorrichtung. Mit der Trocknungsvorrichtung 50 wird die Oberseite 24 getrocknet, d. h. die obenliegenden Bereiche der Motorhaube 28, der Frontscheibe 30, des Daches 32, der Heckscheibe 34 und des Kofferraumdeckels 36.

Die Fahrzeugwaschanlage 10 kann weitere Trocknungsvorrichtungen (nicht gezeigt) aufweisen, um das Fahrzeug 18 seitlich und/oder an der Vorderseite bzw. der Rückseite 22 zu trocknen.

Die Trocknungsvorrichtung 50 umfasst eine Düsentrageinrichtung 52. Die Düsentrageinrichtung 52 ist an den Vertikalträgern 40 des Waschportals 12 gehalten und erstreckt sich in Querrichtung 54 (quer zur Behandlungsrichtung 16). Die Düsentrageinrichtung 52 ist vorzugsweise horizontal ausgerichtet.

An den Vertikalträgern 40 ist die Düsentrageinrichtung 52 höhenverstellbar gehalten. Um die Höhe der Düsentrageinrichtung 52 relativ zur Standfläche 14 zu ändern, umfasst die Trocknungsvorrichtung 50 eine Hubeinrichtung 56. Mittels der Hubeinrichtung 56 kann die Düsentrageinrichtung 52 abgesenkt oder angehoben werden. Die Hubeinrichtung 56 ist beispielsweise an einem oder beiden Vertikalträger(n) 40 angeordnet.

Ferner umfasst die Trocknungsvorrichtung 50 eine Neigungseinrichtung 58. Über die Neigungseinrichtung 58 kann die Düsentrageinrichtung 52 um eine in Querrichtung 54 verlaufende Neigungsachse 60 relativ zu den Vertikalträgern 40 geneigt oder verschwenkt werden. Die Neigungseinrichtung 58 ist beispielsweise an den Vertikalträger(n) 40 angeordnet. Die Neigungseinrichtung 58 kann mit der Hubeinrichtung 56 eine integrierte Einheit bilden oder getrennt von dieser gebildet sein.

Die Düsentrageinrichtung 52 umfasst einen Träger 62, über die die Düsentrageinrichtung 52 höhenverstellbar und neigbar an den Vertikalträgern 40 gehalten ist. Der Träger 62 erstreckt sich in Querrichtung 54 und ist geradlinig ausgestaltet. Beim Trocknungsvorgang ist der Träger 62 oberhalb des Fahrzeuges 18 angeordnet.

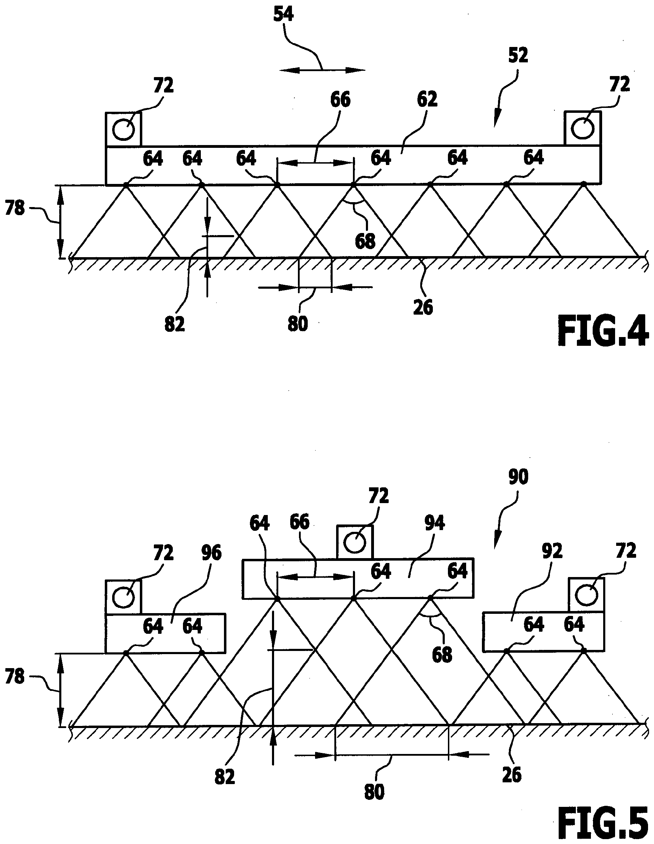

Am Träger 62 ist eine Mehrzahl von Düsen 64 der Trocknungsvorrichtung 50 gehalten. Figur 4 zeigt schematisch den Träger 62 und daran die Anordnung der Düsen 64.

Die Düsen 64 sind bei der erfindungsgemäßen Fahrzeugwaschanlage 10 insbesondere Flachstrahldüsen. Aus jeder der Düsen 64 kann ein sich fächerförmig erweiternder Luftstrom austreten, der sich in Richtung auf die zu trocknende Fahrzeugfläche 26 verbreitert.

Die Düsen 64 sind im Abstand zueinander am Träger 62 angeordnet. Vorzugsweise sind die Düsen 64 geradlinig am Träger 62 angeordnet und in Querrichtung 54 seitlich nebeneinander. Die Trocknungsvorrichtung 50 weist sieben Düsen 64 auf.

Günstig ist es, wenn die Düsen 64 äquidistant am Träger 62 angeordnet sind. Bei einer vorteilhaften Umsetzung der Fahrzeugwaschanlage 10 beträgt der Abstand 66 benachbarter Düsen 64 voneinander beispielsweise ungefähr 15 cm bis 25 cm, noch bevorzugter ungefähr 18 cm bis 20 cm.

Die Düsen 64 stellen, wie erwähnt, einen sich fächerförmig ausbreitenden Luftstrom bereit. Bei einer vorteilhaften Umsetzung der Fahrzeugwaschanlage 10 beträgt ein Öffnungswinkel 68 des an den Düsen 64 austretenden Luftstroms ungefähr 50° bis 80°, vorzugsweise ungefähr 70°.

Die Düsen 64 weisen vorzugsweise einen Öffnungsquerschnitt von ca. 140 mm² bis 200 mm² auf, gemessen als Projektion längs einer Ausströmachse der Düsen (in Figur 4 in der Zeichnungsebene).

Die von den Düsen 64 austretenden flachen Luftströme liegen in einer Ebene oder im Wesentlichen in einer Ebene. Die Ebene kann durch Verstellen der Düsentrageinrichtung 52 mit der Neigungseinrichtung 58 verschwenkt werden. Dabei ist es beispielsweise möglich, dass die Ebene vertikal ausgerichtet ist (senkrecht zur Behandlungsrichtung 16). Denkbar ist auch, dass die Ebene durch Verschwenken der Düsentrageinrichtung 52 so geneigt ist, dass die Luftströme der Düsen 64 sich in einer Richtung ausbreiten, die eine Komponente in Behandlungsrichtung 16 oder entgegen der Behandlungsrichtung 16 aufweist. Dies gibt beispielsweise die Möglichkeit, die Luftströme der Düsen 64 relativ zur Oberseite 24 so auszurichten, dass die Luftströme stets senkrecht auf die zu trocknende Fahrzeugfläche 26 auftreffen.

Die Trocknungsvorrichtung 50 umfasst mindestens ein Gebläse 72, um die Düsen 64 mit Trocknungsluft zu beaufschlagen. Vorliegend sind beispielsweise zwei Gebläse 72 vorgesehen. Die Gebläse 72 sind zum Beispiel am Träger 62 gehalten. Von den Gebläsen 72 bereitgestellte Trocknungsluft beaufschlagt die Düsen 64 und wird von diesen jeweils fächerförmig in Richtung auf die Fahrzeugfläche 26 bereitgestellt.

Die Gebläse 72 stellen bevorzugt einen Volumenstrom an Trocknungsluft von ungefähr 25 l/s bis 35 l/s je Düse 64 bereit.

Die Fahrzeugwaschanlage 10 umfasst eine Steuereinrichtung 74 (Figur 3). Die Steuereinrichtung 74 steuert beispielsweise die Bewegung des Waschportals 12 und die Funktion der Waschwerkzeuge 44. Die Steuereinrichtung 74 ist elektrisch mit der Hubeinrichtung 56 und der Neigungseinrichtung 58 verbunden. Abhängig von einem Signal der Steuereinrichtung 74 kann die Düsentrageinrichtung 52 angehoben oder abgesenkt bzw. um die Neigungsachse 60 geneigt werden.

Denkbar ist auch, dass die Steuereinrichtung 74 elektrisch mit den Gebläsen 72 verbunden ist, um die Menge an Trocknungsluft, die den Düsen 64 bereitgestellt wird, einzustellen.

Die Fahrzeugwaschanlage 10 umfasst ferner eine Detektionseinrichtung 76. Mit der Detektionseinrichtung 76 ist insbesondere die Kontur des Fahrzeugs 18 erfassbar und der Steuereinrichtung 74 ein diesbezügliches Signal bereitstellbar. Die Detektionseinrichtung 76 umfasst zu diesem Zweck beispielsweise mindestens eine Lichtschranke oder einen Lichtvorhang, mit dem das Fahrzeug 18 vor dem Trocknungsvorgang vermessen wird. Abhängig vom Signal der Detektionseinrichtung 76 kann die Steuereinrichtung 74 die Lage der Oberseite 24 und damit der zu trocknenden Fahrzeugfläche 26 relativ zur Position des Waschportals 12 in Bezug auf das Fahrzeug 18 ermitteln. Dadurch ist auch die Lage der Fahrzeugfläche 26 relativ zu den Düsen 64 bekannt.

Zum Trocknen der Oberseite 24 mit der Dachtrocknungsvorrichtung 50 kann beispielsweise folgendermaßen vorgegangen werden:
Die Steuereinrichtung 74 verschiebt das Waschportal 12 in eine Ausgangsstellung, bei der das Waschportal 12 an der Vorderseite 20 angeordnet ist. Anschließend wird das Waschportal 12 längs der Behandlungsrichtung 16 relativ zum Fahrzeug 18 bewegt. Dies kann auch umgekehrt erfolgen. Das Waschportal 12 kann ausgehend von der Rückseite 22 in Richtung der Vorderseite 20 des Fahrzeugs 18 bewegt werden.

Abhängig vom zuvor aufgenommenen Signal der Detektionseinrichtung 76 und der daraus ermittelten Fahrzeugkontur steuert die Steuereinrichtung 74 die Hubeinrichtung 56 derart an, dass die Düsen 64 relativ zur Oberseite 24 einen definierten Abstand 78 aufweisen (Figur 4).

Der Abstand 78 wird insbesondere derart eingestellt, dass die Luftströme benachbarter Düsen 64 an der Fahrzeugfläche 26 aneinander angrenzen oder sich an der Fahrzeugfläche 26 zumindest teilweise überlagern. Letzteres ist in Figur 4 schematisch dargestellt, bei der die Überlagerung benachbarter Luftströme an der Fahrzeugfläche 26 ungefähr 5 cm bis 10 cm beträgt. Das Bezugszeichen 80 kennzeichnet einen diesbezüglichen Überlagerungsbereich an der Fahrzeugfläche 26.

In einem Abstand von ungefähr 5 cm von der Fahrzeugfläche 26 schneiden sich einander benachbarte Luftströme. Der diesbezügliche Abstand ist in Figur 4 mit dem Bezugszeichen 82 gekennzeichnet.

Beim Verfahren des Waschportals 12 in Behandlungsrichtung 16 wird die Hubeinrichtung 56 über die Steuereinrichtung 74 so angehoben bzw. abgesenkt, dass sichergestellt ist, dass die Luftströme einander benachbarter Düsen 64 an der Fahrzeugfläche 26 zumindest aneinander grenzen oder einander überlagern. Vorzugsweise wird der Abstand 78 der Düsen 64 von der Fahrzeugfläche 26 durch Steuerung und/oder Regelung konstant gehalten. Die Düsentrageinrichtung 52 wird dementsprechend über die Hubeinrichtung 56 angehoben bzw. abgesenkt, um der Kontur des Fahrzeugs 18 zu folgen.

Wie erwähnt, kann die Ebene der Luftströme der Düsen 64 vertikal sein oder jeweils senkrecht zur Fahrzeugfläche 26 eingestellt werden, indem die Düsentrageinrichtung 52 über die Neigungseinrichtung 58 geneigt wird. Denkbar ist auch, jeweils eine schräg zur Behandlungsrichtung 16 ausgerichtete Ebene der Luftströme der Düsen 64 bereitzustellen, um die Flüssigkeit in der Behandlungsrichtung 16 über die Fahrzeugfläche 26 zu treiben.

Durch den Einsatz von Flachstrahldüsen 64 im Abstand zueinander kann der Energieaufwand, um ein zuverlässiges Trocknungsergebnis zu erzielen, verhältnismäßig gering gehalten werden. Der von den Gebläsen 72 bereitgestellte Volumenstrom kann gegenüber Trocknungsvorrichtungen herkömmlicher Fahrzeugwaschanlagen verringert werden.

Indem die Luftströme in einer Ebene oder im Wesentlichen in einer Ebene bereitgestellt werden, wird Flüssigkeit zuverlässig von der Fahrzeugfläche 26 verdrängt. Um zu vermeiden, dass in Querrichtung 54 zwischen den Düsen 64 ungetrocknete Bereiche an der Fahrzeugfläche 26 verbleiben, ist es von besonderem Vorteil, wenn die Luftströme benachbarter Düsen 64 wie vorstehend erläutert an der Fahrzeugfläche 26 aneinander grenzen oder einander zumindest bereichsweise überlagern.

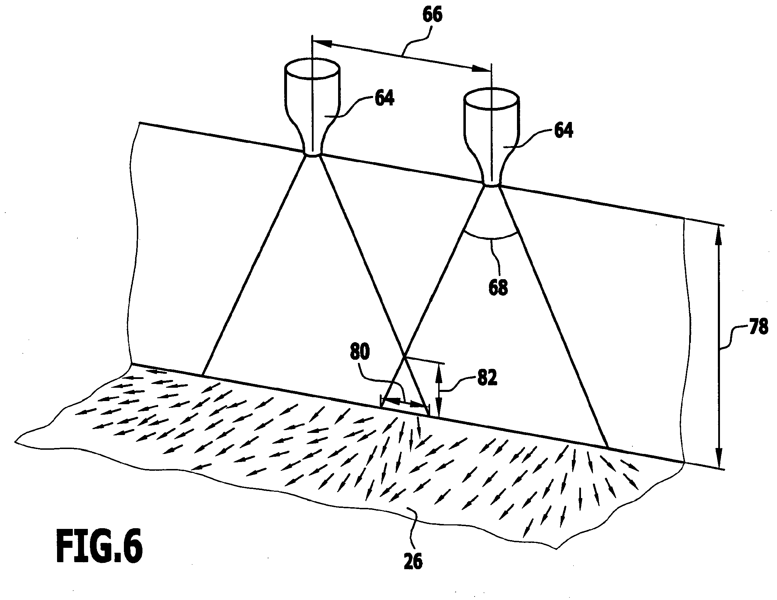

Figur 6 stellt den Überlapp der Luftströme benachbarter Düsen 64 an der Fahrzeugfläche 26 schematisch dar (nur zwei Düsen 64 sind gezeigt). In Figur 6 ist auch zu erkennen, wie die Luftströme benachbarter Düsen sich bereits oberhalb der Fahrzeugfläche 26 schneiden. Pfeile auf der Fahrzeugfläche 26 symbolisieren lokale Luftströmungen.

Es zeigt sich in der Praxis, dass durch Einsatz der Trocknungsvorrichtung 50 die Oberseite 24 bereits mit nur einer Überfahrt mit dem Waschportal 12 getrocknet werden kann. Während der Rückfahrt des Waschportals 12 entgegen der Behandlungsrichtung 16 können die Gebläse 72 abgeschaltet und dadurch zusätzlich Energie eingespart werden. Außerdem kann das Waschportal 12 zügiger als bei herkömmlichen Fahrzeugwaschanlagen verfahren und dadurch die Gesamtbehandlungsdauer reduziert werden.

Figur 5 zeigt in einer der Figur 4 entsprechenden Weise schematisch eine Düsentrageinrichtung 52 einer Trocknungsvorrichtung, wie sie bei einer andersartigen erfindungsgemäßen Fahrzeugwaschanlage anstelle der Trocknungsvorrichtung 50 zum Einsatz kommen kann. Für gleiche oder gleichwirkende Merkmale werden identische Bezugszeichen verwendet.

Bei der in Figur 5 dargestellten Düsentrageinrichtung 90 ist nicht nur ein Träger 62 vorgesehen, sondern drei in Querrichtung nebeneinander angeordnete Träger 92, 94 und 96. An jedem Träger 92, 94, 96 ist zumindest eine Düse 64 angeordnet. Vorliegend sind an den Trägern 92 und 96 jeweils zwei Düsen 64 und an dem dazwischenliegenden Träger 94 drei Düsen 64 angeordnet.

Jedem Träger 92, 94, 96 ist beispielsweise ein Gebläse 72 zum Beaufschlagen der an diesem Träger 92, 94, 96 angeordneten Düsen 64 zugeordnet.

Die Träger 92, 94, 96 sind getrennt voneinander gebildet und können gemeinsam oder getrennt voneinander am Waschportal 12 gehalten sein, insbesondere höhenverstellbar und/oder neigbar, wie dies beim Träger 62 der Fall ist. Dabei kann jedem Träger 92, 94, 96 eine separate Hubeinrichtung 56 bzw. Neigungseinrichtung 58 zugeordnet sein. Denkbar ist auch, dass eine gemeinsame Hubeinrichtung 56 bzw. Neigungseinrichtung 58 zum Einsatz kommt.

Bei der in Figur 5 dargestellten Variante ist der Träger 94 in Höhenrichtung oberhalb der Träger 92, 96 angeordnet. Dadurch kann sichergestellt werden, dass im Bereich der Fahrzeugmitte größere Überlagerungsbereiche 80 zwischen den Luftströmen einander benachbarter Düsen 64 an der Fahrzeugfläche 26 erzielt werden. Dies kann sich zum Beispiel vorteilhaft auf das Trocknungsergebnis auswirken.

Im Übrigen sind bereits die im Zusammenhang mit der Erläuterung der Trocknungsvorrichtung 50 erzielbaren Vorteile auch bei Einsatz der Düsentrageinrichtung 90 erzielbar, so dass diesbezüglich auf die voranstehenden Ausführungen verwiesen werden kann.

### Bezugszeichenliste:

- 10: Fahrzeugwaschanlage
- 12: Waschportal
- 14: Standfläche
- 16: Behandlungsrichtung
- 18: Fahrzeug
- 20: Vorderseite
- 22: Rückseite
- 24: Oberseite
- 26: Fahrzeugfläche
- 28: Motorhaube
- 30: Frontscheibe
- 32: Dach
- 34: Heckscheibe
- 36: Kofferraumdeckel
- 38: Halteeinrichtung
- 40: Vertikalträger
- 42: Querträger
- 44: Waschwerkzeug
- 46: Seitenbürste
- 48: Dachbürste
- 50: Trocknungsvorrichtung
- 52: Düsentrageinrichtung
- 54: Querrichtung
- 56: Hubeinrichtung
- 58: Neigungseinrichtung
- 60: Neigungsachse
- 62: Träger
- 64: Düsen
- 66: Abstand
- 68: Öffnungswinkel
- 72: Gebläse
- 74: Steuereinrichtung
- 76: Detektionseinrichtung
- 78: Abstand
- 80: Überlagerungsbereich
- 82: Abstand
- 90: Düsentrageinrichtung
- 92: Träger
- 94: Träger
- 96: Träger

## Patentansprüche

1. Fahrzeugwaschanlage, umfassend eine Trocknungsvorrichtung (50) zum Trocknen eines Kraftfahrzeugs (18), die an einer Halteeinrichtung (38) der Fahrzeugwaschanlage (10) gehalten ist und eine Düsentrageinrichtung (52, 90) aufweist, mindestens ein Gebläse (72) sowie eine Mehrzahl von Düsen (64), die im Abstand (66) zueinander an der Düsentrageinrichtung (52, 90) angeordnet sind und vom mindestens einen Gebläse (72) mit Trocknungsluft beaufschlagbar sind, **dadurch gekennzeichnet, dass** die Düsen (64) Flachstrahldüsen (64) sind, die jeweils einen sich fächerförmig ausbreitenden Luftstrom bereitstellen.

2. Fahrzeugwaschanlage nach Anspruch 1, **dadurch gekennzeichnet, dass** die Trocknungsvorrichtung (50) eine Dachtrocknungsvorrichtung der Fahrzeugwaschanlage (10) ist.

3. Fahrzeugwaschanlage nach Anspruch 1 oder 2, **dadurch gekennzeichnet, dass** die Trocknungsvorrichtung (50) eine Hubeinrichtung (56) aufweist, über die die Düsentrageinrichtung (52, 90) höhenverstellbar an der Halteeinrichtung (38) gehalten ist.

4. Fahrzeugwaschanlage nach Anspruch 3, **dadurch gekennzeichnet, dass** die Fahrzeugwaschanlage (10) eine Detektionseinrichtung (76) umfasst, mit der die Lage einer zu trocknenden Fahrzeugfläche (26) des Fahrzeuges (18) relativ zu den Düsen (64) erfassbar ist, und dass mittels der Hubeinrichtung (56) ein Abstand (78) der Düsen (64) von der Fahrzeugfläche (26) derart einstellbar ist, dass Luftströme benachbarter Düsen (64) an der Fahrzeugfläche (26) aneinander grenzen oder einander zumindest teilweise überlagern, insbesondere dass der Abstand (78) derart einstellbar ist, dass die Luftströme benachbarter Düsen (64) einander oberhalb der zu trocknenden Fahrzeugfläche (26) überlagern.

5. Fahrzeugwaschanlage nach Anspruch 4, **dadurch gekennzeichnet, dass** mit der Detektionseinrichtung (76) die Kontur des Fahrzeuges (18) zur Ermittlung der Lage der zu trocknenden Fahrzeugfläche (26) erfassbar ist.

6. Fahrzeugwaschanlage nach Anspruch 4 oder 5, **dadurch gekennzeichnet, dass** der Abstand (78) der Düsen (64) von der Fahrzeugfläche (26) kleiner ist als ungefähr 50 cm, vorzugsweise kleiner als 30 cm, und noch bevorzugter ungefähr 10 cm bis 25 cm beträgt.

7. Fahrzeugwaschanlage nach einem der voranstehenden Ansprüche, **dadurch gekennzeichnet, dass** zumindest eines der Folgenden gilt:
- ein Öffnungswinkel (68) des von den Düsen (64) bereitgestellten Luftstroms ist kleiner als ungefähr 120°, vorzugsweise kleiner als 90°, und beträgt noch bevorzugter ungefähr 50° bis 80°;
- der Abstand (66) benachbarter Düsen (64) voneinander beträgt ungefähr 10 cm bis 30 cm, vorzugsweise ungefähr 15 cm bis 25 cm;
- die Düsen (64) sind äquidistant zueinander an der Düsentrageinrichtung (52, 90) angeordnet, insbesondere sind die Düsen (64) an einem Träger (62, 92, 94, 96) der Düsentrageinrichtung (52, 90) gehalten.

8. Fahrzeugwaschanlage nach einem der voranstehenden Ansprüche, **dadurch gekennzeichnet, dass** die Düsentrageinrichtung (52, 90) einen quer zu einer Behandlungsrichtung (16) der Fahrzeugwaschanlage (10) ausgerichteten Träger (62, 92, 94, 96) umfasst, an dem mindestens zwei und vorzugsweise alle Düsen (64) in Querrichtung (54) nebeneinander angeordnet sind.

9. Fahrzeugwaschanlage nach Anspruch 8, **dadurch gekennzeichnet, dass** zwei oder mehr, in Querrichtung (54) nebeneinander angeordnete Träger (92, 94, 96) vorgesehen sind, an denen jeweils mindestens eine Düse (64) angeordnet ist, vorzugsweise zumindest zwei Düsen (64).

10. Fahrzeugwaschanlage nach Anspruch 8 oder 9, **dadurch gekennzeichnet, dass** der Träger (62, 92, 94, 96) geradlinig ausgestaltet ist und/oder dass die Düsen (64) längs einer geraden Linie am Träger (62, 92, 94, 96) angeordnet sind.

11. Fahrzeugwaschanlage nach Anspruch 8 oder 9, **dadurch gekennzeichnet, dass** der Träger in Behandlungsrichtung eine konvexe Krümmung aufweist und/oder dass die Düsen längs eines in Behandlungsrichtung konvex gekrümmten Bogens am Träger angeordnet sind.

12. Fahrzeugwaschanlage nach einem der voranstehenden Ansprüche, **dadurch gekennzeichnet, dass** die Trocknungsvorrichtung (50) eine Neigungseinrichtung (58) aufweist zum Neigen der Düsentrageinrichtung (52, 90) um eine quer zu einer Behandlungsrichtung (16) ausgerichtete Neigungsachse (60), insbesondere dass die Luftströme der Düsen (64) senkrecht auf eine zu trocknende Fahrzeugfläche (26) ausrichtbar sind, deren Orientierung mittels einer Detektionseinrichtung (76) erfassbar ist.

13. Fahrzeugwaschanlage nach einem der voranstehenden Ansprüche, **dadurch gekennzeichnet, dass** die von den Düsen (64) emittierten Luftströme quer zu einer Behandlungsrichtung (16) ausgerichtet sind und/oder dass die von den Düsen (64) emittierten Luftströme in einer Ebene oder im Wesentlichen in einer Ebene liegen.

14. Fahrzeugwaschanlage nach einem der voranstehenden Ansprüche, **dadurch gekennzeichnet, dass** die Düsen (64) identisch sind.

15. Fahrzeugwaschanlage nach einem der voranstehenden Ansprüche, **dadurch gekennzeichnet, dass** zwei oder mehr Düsen (64) mit einem Gebläse (72) strömungsverbunden sind oder dass die Trocknungsvorrichtung (50) eine Mehrzahl von Gebläsen (72) umfasst, die jeweils einer Düse (64) zugeordnet sind.

16. Fahrzeugwaschanlage nach einem der voranstehenden Ansprüche, **dadurch gekennzeichnet, dass** die Fahrzeugwaschanlage (10) eine Portalwaschanlage ist oder umfasst oder dass die Fahrzeugwaschanlage eine Waschstraße ist oder umfasst.

## Claims

1. Vehicle wash facility, comprising a drying apparatus (50) for drying a motor vehicle (18) which is held to a holding device (38) of the vehicle wash facility (10) and comprises a nozzle support device (52, 90), at least one blower (72) and a plurality of nozzles (64) which are arranged at a distance (66) relative to one another at the nozzle support device (52, 90) and which can be supplied with drying air by the at least one blower (72), **characterized in that** the nozzles (64) are flat jet nozzles (64), each providing a flow of air that spreads out in a fan shape.

2. Vehicle wash facility in accordance with claim 1, **characterized in that** the drying apparatus (50) is a roof drying apparatus of the vehicle wash facility (10).

3. Vehicle wash facility in accordance with claim 1 or 2, **characterized in that** the drying apparatus (50) comprises a lifting device (56) via which the nozzle support device (52, 90) is held to the holding device (38) in a height-adjustable manner.

4. Vehicle wash facility in accordance with claim 3, **characterized in that** the vehicle wash facility (10) comprises a detection device (76) with which the location of a vehicle surface (26) that is to be dried of the vehicle (18) relative to the nozzles (64) is detectable and **in that** a distance (78) of the nozzles (64) from the vehicle surface (26) is adjustable by way of the lifting device (56) in such a manner that air flows of adjacent nozzles (64), at the vehicle surface (26), are adjacent to one another, or at least partially overlap one another, in particular **in that** the distance (78) is adjustable such that the air flows of adjacent nozzles (64) overlap one another above the vehicle surface (26) to be dried.

5. Vehicle wash facility in accordance with claim 4, **characterized in that** the detection device (76) allows the contour of the vehicle (18) to be detected for determining the location of the vehicle surface (26) to be dried.

6. Vehicle wash facility in accordance with claim 4 or 5, **characterized in that** the distance (78) of the nozzles (64) from the vehicle surface (26) is less than approximately 50 cm, preferably less than 30 cm, and more preferably approximately 10 cm to 25 cm.

7. Vehicle wash facility in accordance with any one of the preceding claims, **characterized in that** at least one of the following applies:
- an opening angle (68) of the air flow provided by the nozzles (64) is less than approximately 120°, preferably less than 90° and more preferably approximately 50° to 80°;
- the distance (66) of adjacent nozzles (64) relative to one another is approximately 10 cm to 30 cm, preferably approximately 15 cm to 25 cm;
- the nozzles (64) are arranged in equidistantly spaced relation to one another at the nozzle support device (52, 90) and the nozzles (64) are in particular held to a carrier (62, 92, 94, 96) of the nozzle support device (52, 90).

8. Vehicle wash facility in accordance with any one of the preceding claims, **characterized in that** the nozzle support device (52, 90) comprises a carrier (62, 92, 94, 96) which is oriented transversely to a treatment direction (16) of the vehicle wash facility (10) and at which are arranged at least two and preferably all of the nozzles (64) side by side in a transverse direction (54).

9. Vehicle wash facility in accordance with claim 8, **characterized in that** two or more carriers (92, 94, 96), arranged side by side in transverse direction (54), are provided, each of these having arranged thereat at least one nozzle (64), preferably at least two nozzles (64).

10. Vehicle wash facility in accordance with claim 8 or 9, **characterized in that** the carrier (62, 92, 94, 96) is of straight-lined configuration and/or **in that** the nozzles (64) are arranged along a straight line at the carrier (62, 92, 94, 96).

11. Vehicle wash facility in accordance with claim 8 or 9, **characterized in that** the carrier has a convex curvature in the treatment direction and/or **in that** the nozzles are arranged at the carrier along an arc of convex curvature in the treatment direction.

12. Vehicle wash facility in accordance with any one of the preceding claims, **characterized in that** the drying apparatus (50) comprises a tilting device (58) for tilting the nozzle support device (52, 90) about a tilting axis (60) oriented transversely to a treatment direction (16), in particular **in that** the air flows of the nozzles (64) are perpendicularly orientable towards a vehicle surface (26) to be dried whose orientation is detectable by way of a detection device (76).

13. Vehicle wash facility in accordance with any one of the preceding claims, **characterized in that** the air flows emitted from the nozzles (64) are oriented transversely to a treatment direction (16) and/or **in that** the air flows emitted from the nozzles (64) lie in one plane or substantially in one plane.

14. Vehicle wash facility in accordance with any one of the preceding claims, **characterized in that** the nozzles (64) are of identical configuration.

15. Vehicle wash facility in accordance with any one of the preceding claims, **characterized in that** two or more nozzles (64) are in flow communication with a blower (72) or **in that** the drying apparatus (50) comprises a plurality of blowers (72), each of which is associated with a nozzle (64).

16. Vehicle wash facility in accordance with any one of the preceding claims, **characterized in that** the vehicle wash facility (10) is or comprises a gantry-type wash facility or **in that** the vehicle wash facility is or comprises a wash line.

## Revendications

1. Installation de lavage de véhicule, comportant un dispositif de séchage (50) pour le séchage d'un véhicule à moteur (18), qui est retenu sur un dispositif de retenue (38) de l'installation de lavage de véhicule (10) et présente un système de support de buses (52, 90), au moins une soufflante (72) ainsi qu'une pluralité de buses (64), qui sont agencées à distance (66) les unes des autres sur le système de support de buses (52, 90) et qui sont alimentées en air de séchage par l'au moins une soufflante (72), **caractérisée en ce que** les buses (64) sont des buses à jet plat (64), qui fournissent chacune un courant d'air s'élargissant en éventail.

2. Installation de lavage de véhicule selon la revendication 1, **caractérisée en ce que** le dispositif de séchage (50) est un dispositif de séchage de toit de l'installation de lavage de véhicule (10).

3. Installation de lavage de véhicule selon la revendication 1 ou 2, **caractérisée en ce que** le dispositif de séchage (50) comprend un système de levage (56) par l'intermédiaire duquel le système de support de buses (52, 90) est retenu réglable en hauteur sur le dispositif de retenue (38).

4. Installation de lavage de véhicule selon la revendication 3, **caractérisée en ce que** l'installation de lavage de véhicule (10) comporte un système de détection (76) à l'aide duquel la position d'une surface de véhicule (26) à sécher du véhicule (18) par rapport aux buses (64) peut être détectée, et **en ce qu'**un écart (78) entre les buses (64) et la surface de véhicule (26) peut être réglé au moyen du système de levage (56), de telle manière que les courants d'air des buses (64) voisines sur la surface de véhicule (26) sont contigus ou, au moins en partie, superposés, en particulier **en ce que** l'écart (78) peut être réglé de telle sorte que les courants d'air des buses (64) voisines se superposent au-dessus de la surface de véhicule (26) à sécher.

5. Installation de lavage de véhicule selon la revendication 4, **caractérisée en ce que** le contour du véhicule (18) peut être détecté à l'aide du système de détection (76) pour déterminer la position de la surface de véhicule (26) à sécher.

6. Installation de lavage de véhicule selon la revendication 4 ou 5, **caractérisée en ce que** l'écart (78) entre les buses (64) et la surface de véhicule (26) est inférieur à environ 50 cm, de préférence inférieur à 30 cm, et plus préférentiellement d'environ 10 cm à 25 cm.

7. Installation de lavage de véhicule selon l'une quelconque des revendications précédentes, **caractérisée en ce qu'**au moins un parmi ce qui suit s'applique :
- un angle d'ouverture (68) du courant d'air fourni par les buses (64) est inférieur à environ 120°, de préférence inférieur à 90°, et atteint plus préférentiellement environ 50° à 80° ;
- l'écart (66) entre les buses (64) voisines atteint environ 10 cm à 30 cm, de préférence environ 15 cm à 25 cm ;
- les buses (64) sont agencées à équidistance les unes des autres sur le système de support de buses (52, 90), en particulier les buses (64) sont retenues sur un support (62, 92, 94, 96) du système de support de buses (52, 90).

8. Installation de lavage de véhicule selon l'une quelconque des revendications précédentes, **caractérisée en ce que** le système de support de buses (52, 90) comporte un support (62, 92, 94, 96) orienté transversalement à une direction de traitement (16) de l'installation de lavage de véhicule (10), sur lequel au moins deux et de préférence toutes les buses (64) sont agencées les unes à côté des autres dans la direction transversale (54).

9. Installation de lavage de véhicule selon la revendication 8, **caractérisée en ce que** deux supports (92, 94, 96) ou plus agencés les uns à côté des autres dans la direction transversale (54) sont prévus, sur lesquels respectivement au moins une buse (64) est agencée, de préférence au moins deux buses (64).

10. Installation de lavage de véhicule selon la revendication 8 ou 9, **caractérisée en ce que** le support (62, 92, 94, 96) présente une conception en ligne droite et/ou **en ce que** les buses (64) sont agencées le long d'une ligne droite sur le support (62, 92, 94, 96).

11. Installation de lavage de véhicule selon la revendication 8 ou 9, **caractérisée en ce que** le support présente dans la direction de traitement une courbure convexe et/ou **en ce que** les buses sont agencées sur le support le long d'un arc de courbure convexe dans la direction de traitement.

12. Installation de lavage de véhicule selon l'une quelconque des revendications précédentes, **caractérisée en ce que** le dispositif de séchage (50) présente un système d'inclinaison (58) pour l'inclinaison du système de support de buses (52, 90) autour d'un axe d'inclinaison (60) orienté transversalement à une direction de traitement (16), en particulier **en ce que** les courants d'air des buses (64) peuvent être orientés perpendiculairement à une surface de véhicule (26) à sécher dont l'orientation peut être détectée au moyen d'un système de détection (76).

13. Installation de lavage de véhicule selon l'une quelconque des revendications précédentes, **caractérisée en ce que** les courants d'air émis par les buses (64) sont orientés transversalement à une direction de traitement (16) et/ou **en ce que** les courants d'air émis par les buses (64) se situent dans un plan ou sensiblement dans un plan.

14. Installation de lavage de véhicule selon l'une quelconque des revendications précédentes, **caractérisée en ce que** les buses (64) sont identiques.

15. Installation de lavage de véhicule selon l'une quelconque des revendications précédentes, **caractérisée en ce que** deux buses (64) ou plus sont en liaison fluidique avec une soufflante (72) ou **en ce que** le dispositif de séchage (50) comporte une pluralité de soufflantes (72) qui sont associées chacune à une buse (64).

16. Installation de lavage de véhicule selon l'une quelconque des revendications précédentes, **caractérisée en ce que** l'installation de lavage de véhicule (10) est ou comporte une installation de lavage à portique ou **en ce que** l'installation de lavage de véhicule est ou comporte une station de lavage.
